# FASCICULE DE BREVET EUROPEEN

(11) **EP 0 420 033 B1**
(45) Date de publication et mention de la délivrance du brevet: **29.09.1993**
(21) Numéro de dépôt: 90118075.2
(22) Date de dépôt: 20.09.1990
(51) Int. Cl.: B60C 7/12

(54) **Bandage déformable non pneumatique**
Elastischer Rad-Reifen
Non pneumatic-tyre

(30) Priorité: 28.09.1989 FR 8912822
(43) Date de publication de la demande: 03.04.1991
(73) Titulaire: COMPAGNIE GENERALE DES ETABLISSEMENTS MICHELIN - MICHELIN & CIE, 63040 Clermont-Ferrand Cédex (FR)
(72) Inventeur: Dehasse, Benoit, F-63100 Clermont-Ferrand (FR)
(74) Mandataire: Bauvir, Jacques

(56) Documents cités:
- EP-A- 0 297 628
- FR-A- 1 408 477
- FR-A- 2 350 216
- FR-A- 2 357 384
- US-A- 2 620 844

## Description

La présente invention se rapporte aux bandages déformables non pneumatiques, susceptibles d'être utilisés en substitution des pneumatiques sur les véhicules.

On a depuis longtemps essayé de concevoir de tels bandages non pneumatiques, c'est-à-dire fonctionnant sans air sous pression, afin de s'affranchir de tout problème posé par les crevaisons ou les diminutions de la pression de gonflage des pneumatiques. A titre d'exemple, on peut citer la proposition décrite dans le brevet US-A-2,620,844, ou, plus récemment, celle de la demande de brevet EP-A-0 159 888. De tels bandages déformables ont, en règle générale, une tenue de route insuffisante car ils s'avèrent incapables de développer les poussées transversales aptes à guider correctement les véhicules aux vitesses en usage à l'heure actuelle.

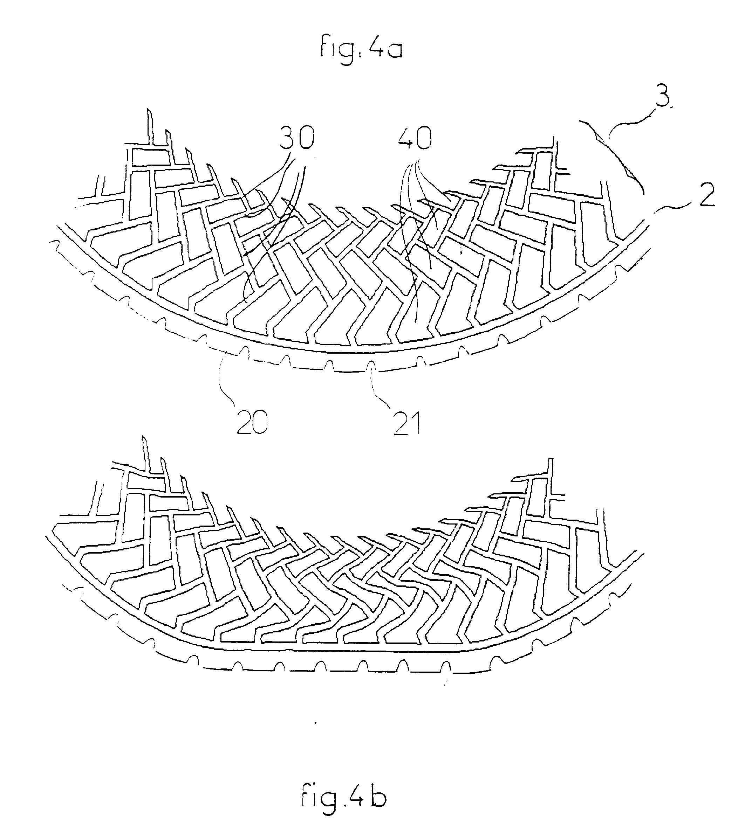

Un bandage déformable présentant les caractéristiques du préambule de la revendication 1 est décrit, par exemple, dans FR-A-1 408 477 (Fig. 4).

L'objectif de la présente invention est de proposer un bandage déformable dont la réalisation soit aussi aisée que possible. L'invention se propose également de réaliser un bandage déformable dont le poids et l'encombrement soient comparables aux mêmes caractéristiques pour les pneumatiques susceptibles d'être remplacés. Un objectif essentiel de l'invention est que, lorsque le bandage déformable supporte sa charge nominale, il développe une aire de contact de surface suffisante, comparable à ce que l'on rencontre pour les pneumatiques afin d'atteindre de bonnes performances et tenue de route.

L'invention vise à pouvoir maîtriser la pression au contact du sol à l'intérieur de l'aire de contact, par exemple à régler la pression de contact pour qu'elle soit légèrement croissante en passant de l'entrée à la sortie de l'aire de contact, afin de prolonger la zone d'adhérence à la sortie de l'aire de contact, là où la contribution à la poussée de dérive est la plus importante.

Selon l'invention, ce but est atteint grâce à un bandage déformable non pneumatique, comportant une base, une structure déformable et un sommet ladite base assurant la transition vers une zone rigide, ledit sommet assurant la liaison avec une bande de roulement, ladite structure déformable comportant des parties massives et des alvéoles, lesdites alvéoles s'étendant transversalement sur toute la largeur dudit bandage, les alvéoles de ladite structure déformable, vues en coupe par tout plan perpendiculaire à l'axe de rotation, étant toutes intrinsèquement dissymétriques par rapport à tout direction radiale, lesdites parties massives étant inclinées par rapport à la direction radiale et, lorsque l'on considère ladite structure (3) en section perpendiculaire à l'axe de rotation, les parties massives étant constituées par des éléments élancés (30) constituant un motif répétitif circonférentiellement, ledit bandage étant caractérisé en ce que lesdits éléments élancés (30) sont disposés selon deux angles de signe opposé, de sorte que le déplacement le long des éléments (30) en progressant depuis la base vers le sommet, en cheminant jusqu'au niveau radialement le plus élevé de tout élément emprunté, impose au moins un passage d'une orientation à l'orientation opposée.

On entend par "inclinées" un angle nettement supérieur à 0° par rapport à la direction radiale, pouvant atteindre 70° par rapport à cette même direction radiale. Une limite inférieure de cet angle est environ 20°. En outre certaines des parties massives appelées éléments auxiliaires peuvent être orientées circonférentiellement, mais jamais radialement.

Une caractéristique importante du bandage selon l'invention est qu'il comporte des perçages transversaux de part en part. Aucune paroi ne peut venir rigidifier les alvéoles ainsi constituées, sous peine de ne pas pouvoir combiner la déformabilité recherchée avec l'endurance et la tenue de route souhaitables. Par contre, on peut prévoir des parois très minces dans un but décoratif, ou de protection de la structure, mais en tout état de cause, la contribution de cette ou de ces parois éventuelles à la raideur du bandage doit être négligeable.

Les alvéoles doivent comporter, comme indiqué, une dissymétrie intrinsèque, c'est-à-dire une dissymétrie dans l'apparence générale, et non pas une dissymétrie de détail due par exemple à des variations d'épaisseur des parties massives.

Le déposant a constaté que, grâce au caractère dissymétrique des alvéoles par rapport à toute direction radiale, et de par l'imbrication réalisée, les parties massives constituant la structure porteuse proprement dite travaillent essentiellement en flexion et non pas essentiellement en compression. La flexion se produit dans un plan perpendiculaire à l'axe de rotation. De ce fait, la matière est beaucoup mieux utilisée et la déformabilité est bien plus maîtrisable. Au contraire, dans le cas d'une structure comme connu de l'état de la technique, parmi celles qui sont conçues pour être déformables, soit la matière est sollicitée en compression et la structure s'écroule par flambage, ou alors la structure atteint beaucoup trop rapidement un état de blocage par fermeture de toutes les alvéoles existantes dans la zone comprise entre la bande de roulement et la roue, ou plus généralement la partie rigide.

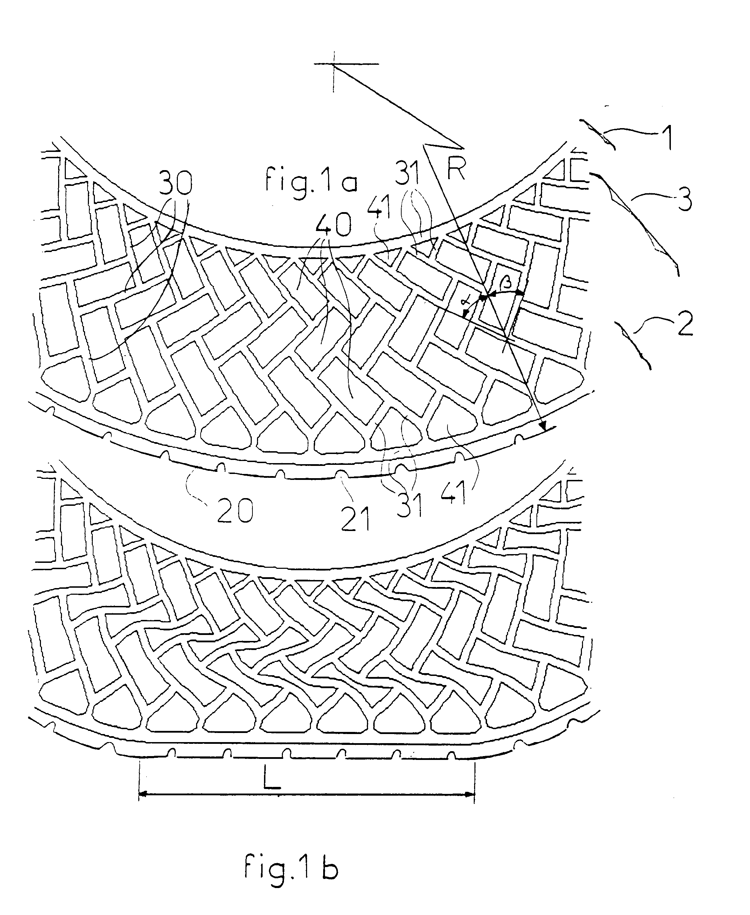

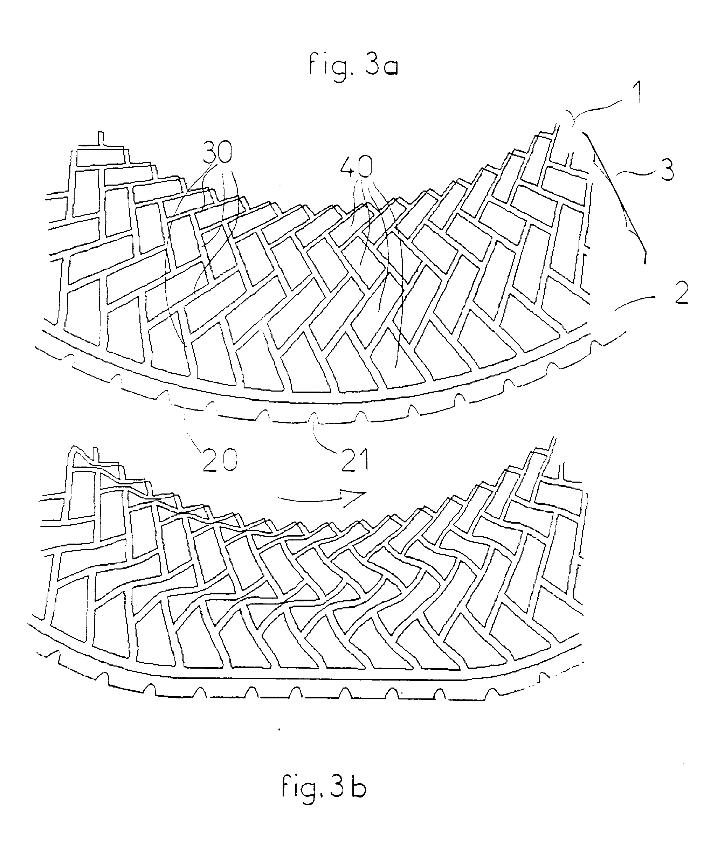

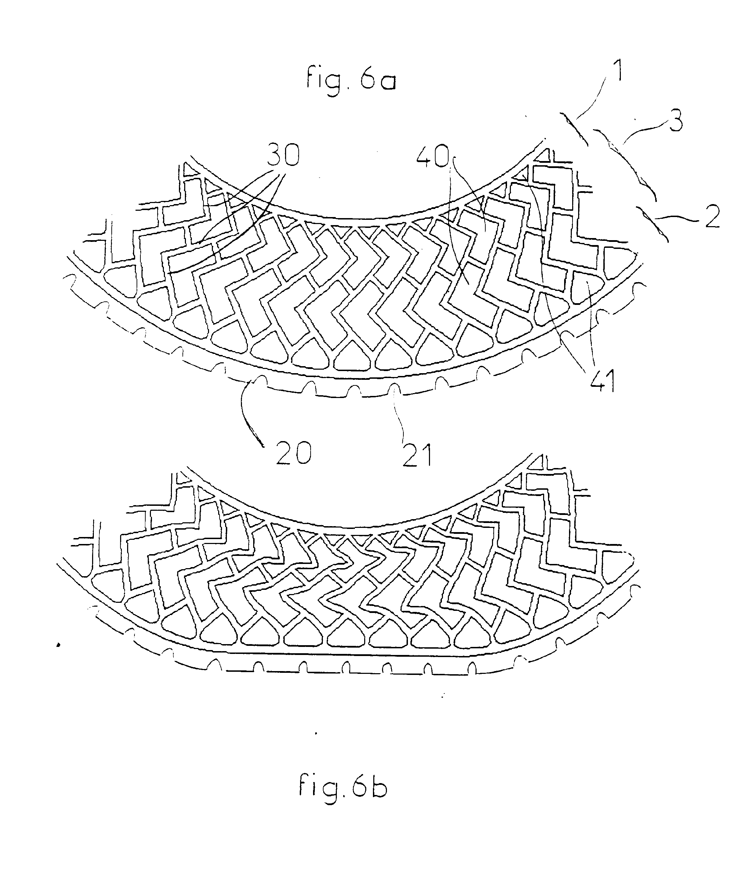

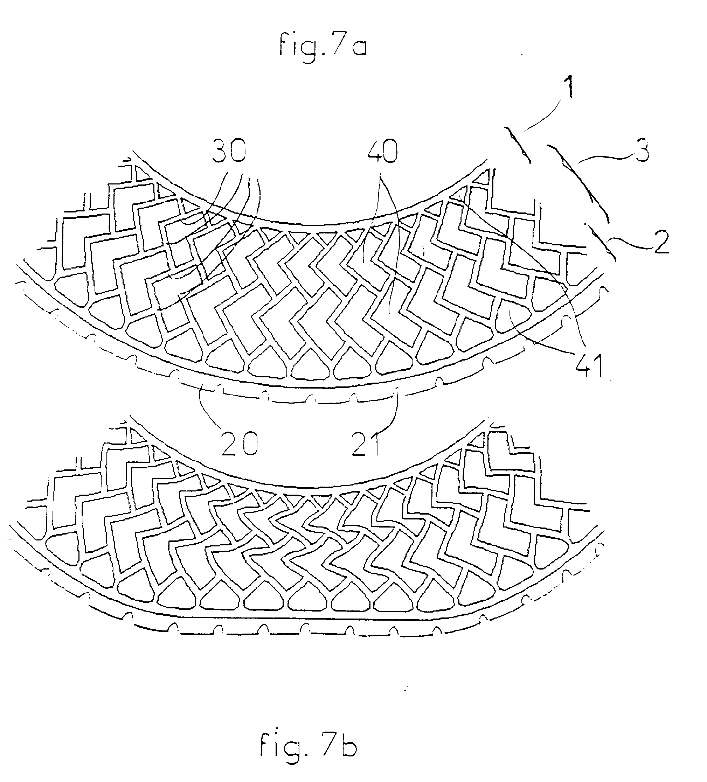

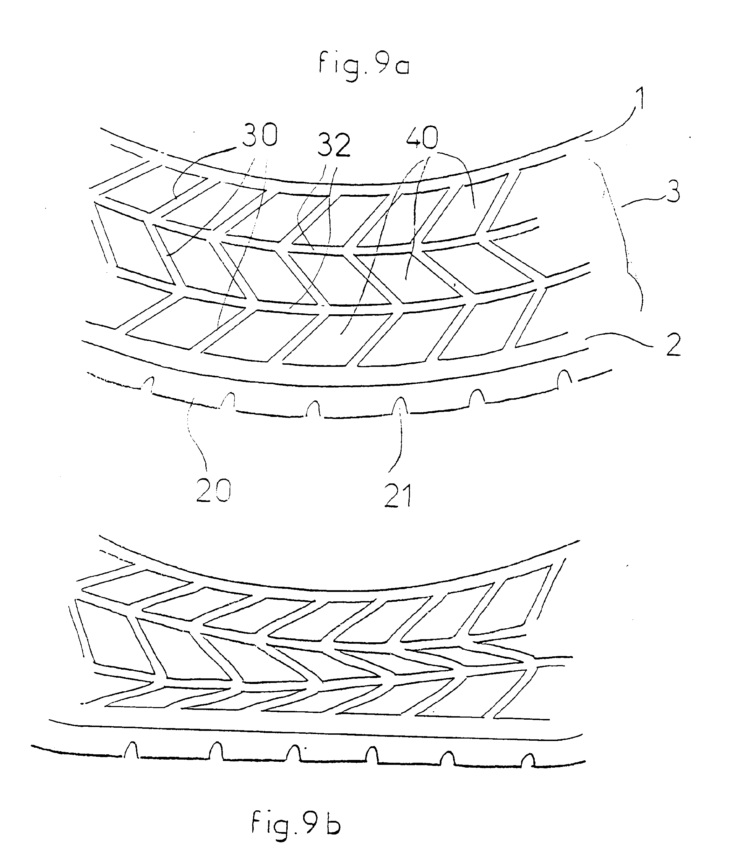

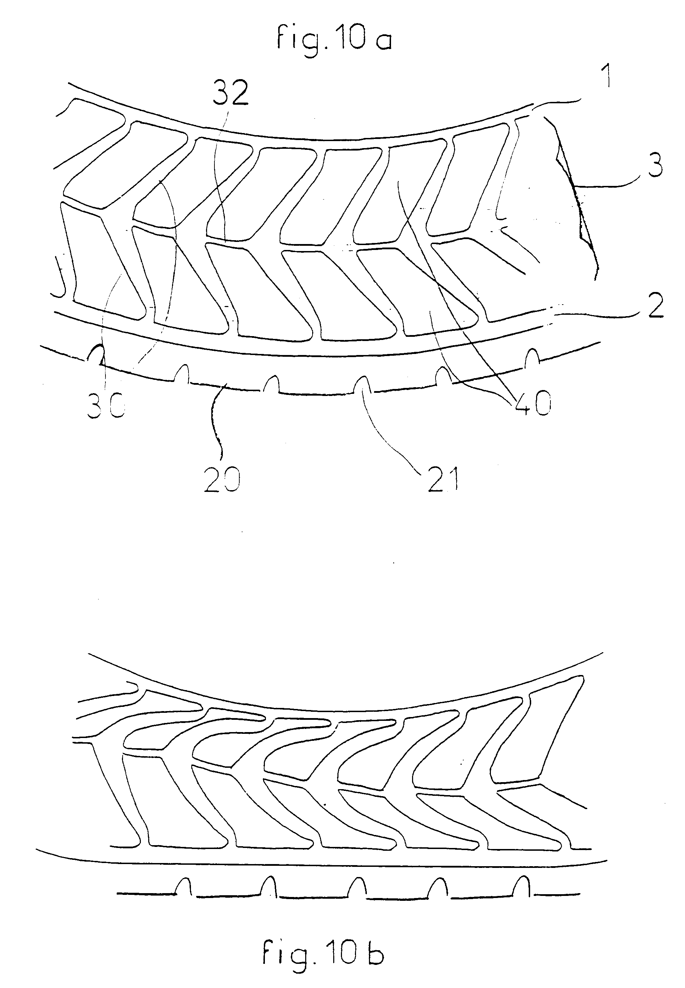

Les figures suivantes illustrent de façon non limitative plusieurs variantes de réalisation de l'invention, permettant de bien en comprendre la réalisation et le fonctionnement. Toutes les figures portant une référence "a" illustrent un bandage ne portant aucune charge, et toutes les figures portant une référence "b" illustrent chaque fois le bandage tel qu'il se déforme quand il supporte la charge nominale. Les figures 1 à 10 illustrent 10 variantes de réalisation de l'invention.

A la figure 1a, on aperçoit partiellement le bandage, comportant une base 1 conçue dans cet exemple pour le montage sur une jante rigide, et un sommet 2, assurant la liaison avec une bande de roulement 20. La bande de roulement peut être réalisée en caoutchouc, et rapportée sur le bandage selon les différentes méthodes bien connues en rechapage des pneumatiques. La bande de roulement peut bien entendu présenter des sculptures 21 tout comme les pneumatiques.

On aperçoit la structure 3 disposée entre la base 1 et le sommet 2. C'est cette structure déformable qui est l'objet spécifique de la présente invention. La base 1 et le sommet 2 apparaissent constituer, dans cet exemple, la prolongation de la structure déformable 3. Elles comportent donc des alvéoles 41. Cependant, comme on peut l'apercevoir en consultant l'allure du bandage déformé à la figure 1b, les zones constituant la base 1 et le sommet 2 n'ont pas de rôle déterminant dans la capacité du bandage à se déformer. Les parties massives 31 bordant les alvéoles 41 forment d'ailleurs une triangulation. La base 1 et le sommet 2 constituent des zones de transitions respectivement vers une zone rigide par rapport à l'axe de rotation (matérialisée sur un véhicule par le moyeu), et vers la bande de roulement 20. Les parties massives de la structure 3 sont constituées d'éléments 30, laissant des alvéoles 40 s'étendant transversalement sur toute la largeur du bandage. De ce fait, la sculpture de la bande de roulement 20 peut comporter des perçages afin de favoriser l'évacuation de l'eau directement au travers de l'épaisseur du sommet et de la bande de roulement, l'éjection de l'eau parvenue dans les alvéoles 41 adjacentes à la bande de roulement 20 se faisant par centrifugation hors de la zone de contact avec la route.

Comme on le voit à la figure 1b, un tel bandage permet une mise à plat de la bande de roulement sur une surface suffisamment importante, grâce à un écrasement, à la flèche maximale de l'ordre de 10 % du rayon extérieur R du bandage à flèche nulle. Il en résulte une souplesse dans le sens radial comparable à celle observée pour les pneumatiques et une bonne adhérence de par la surface de la bande de roulement mise en contact avec le sol.

En outre, le type de découpes dans la structure 3, procurant des alvéoles 40 continues orientées transversalement, donc des éléments 30 eux mêmes orientés transversalement, combiné avec une grande longueur L de l'aire de contact, procure une rigidité transversale apte à s'opposer aux effets de dérive, là encore d'une façon comparable à la rigidité transversale procurée par les pneumatiques. Cette rigidité à la dérive est favorable à la tenue de route. Si l'on réalise un bandage dont le rapport d'aspect, communément appelé H/B pour les pneumatiques correspondant, soit de préférence inférieur à 0.75, le bandage sollicité dans le sens transversal, se déforme en conservant le sommet et la base sensiblement parallèles dans toute section par un plan méridien. Le type de structure selon l'invention, qui dispose les parties massives transversalement et s'appuyant l'une sur l'autre, confère une rigidité à la déformation transversale comparable à la rigidité des flancs d'un pneumatique gonflé ; cette rigidité transversale est favorable à une réponse rapide du bandage aux sollicitations transversales.

La participation des parties massives à la raideur d'écrasement sera fonction de leur largeur et du cube de leur épaisseur car elles travaillent essentiellement à la flexion, mais leur participation à la raideur transversale nécessaire à la tenue de route sera fonction de leur largeur et de leur épaisseur car dans ce cas elles travaillent essentiellement au cisaillement. Dès lors on peut accroître la raideur transversale sans affecter l'écrasement en augmentant la largeur et en réduisant en conséquence les épaisseurs. Par exemple un doublement de la largeur compensé par une réduction adaptée à 20 % des épaisseurs permet d'accroître la raideur transversale de 60 % cependant que le poids va augmenter dans la même proportion.

Pour une même longeur L de contact, une plus grande largeur au sol entraîne une pression moyenne plus faible, et une plus grande surface au sol pour la bande de roulement 20 en caoutchouc, donc une rigidité latérale et en conséquence une rigidité de dérive plus élevées mais un seuil de poussée de valeur inchangée sur sol sec (à coefficient de frottement inchangé) et une poussée qui se développe pour un angle de dérive plus faible.

Comme on peut le voir dans tous les exemples de réalisation, les alvéoles 40 constituent un motif disposé entre la base 1 et le sommet 2, le motif étant répétitif circonférentiellement. Dans toutes les structures illustrant l'invention, si on les considère en section perpendiculaire à l'axe de rotation du bandage, les parties massives sont constituées par des éléments élancés 30 constituant, structurellement, le motif répétitif circonférentiellement.

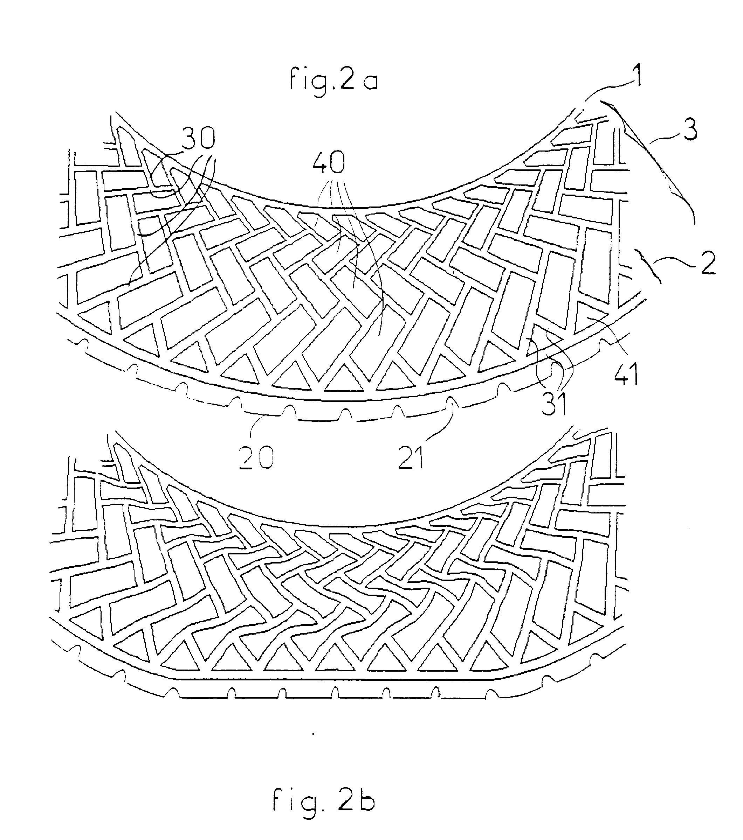

Les éléments élancés 30 sont soit linéaires (figures 2 à 5, et 8 à 10), soit curvilignes (figures 1, 6 et 7), d'épaisseur constante ou variable, selon l'allure de la déformation souhaitée pour le bandage.

Les éléments élancés 30 sont disposés à leur intersection selon deux angles α et β de signe opposé. A la figure 1, on voit que α = - β, pour une position radiale déterminée, ce qui est aussi le cas des exemples 2 et 4 à 7. Le module de ces angles diminue légèrement lorsque la position radiale de la mesure se rapproche de la bande de roulement 20, pour les exemples 2, 3, 4, et il reste constant pour les autres exemples.

Dans tous ces exemples de réalisation, les parties massives sont agencées de telle sorte que le déplacement le long desdits éléments élancés 30 en progressant depuis la base vers le sommet, en cheminant toujours jusqu'au niveau radialement le plus élevé de tout élément emprunté, impose au moins un passage d'une orientation à l'orientation opposée.

Dans les exemples de réalisation 1 à 5, et 9 et 10, les alvéoles sont de forme quadrangulaire, approximativement rectangulaire (1 à 4), ou en parallélogramme (9 et 10). Aux exemples 6, 7 et 8, on voit des alvéoles en forme de chevron. Le plus souvent, dans un motif, deux alvéoles adjacentes dans le sens radial sont orientées circonférentiellement en sens opposés.

Les exemples 1 et 2 procurent une structure 3 très homogène, très déformable et très stable dans la déformation ; le sommet 2 comporte des alvéoles 41 en forme de triangle, assurant une transition progressive entre la structure 3 déformable et la bande de roulement 20. De la sorte, la répartition de pression au sol est assez uniforme. On peut également réaliser un sommet non continu circonférentiellement, dans le cas où la sculpture souhaitée est une succession de blocs massifs pour réaliser un effet d'engrenage sur le sol. En outre, le sommet 2 peut être renforcé, par exemple à la lumière de ce qui est connu pour les ceintures de pneumatique.

Le bandage de l'exemple 3, dont les angles α et β sont très différents, est intrinséquement un peu moins déformable (à épaisseur d'éléments 30 comparable). Mais il permet d'obtenir des efforts au sol non symétriques, notamment une augmentation de la pression à l'arrière de l'aire de contact (voir flèches indiquant le sens de rotation considéré). Les bandages des exemples 3 et 4 ont leurs éléments 30 directement reliés au sommet 2. Ceci provoque une légère ondulation de la bande de roulement (vue en coupe perpendiculaire à l'axe de rotation), ce qui est très favorable à l'adhérence sur sol meuble, comme bien connu en soi pour les pneumatiques.

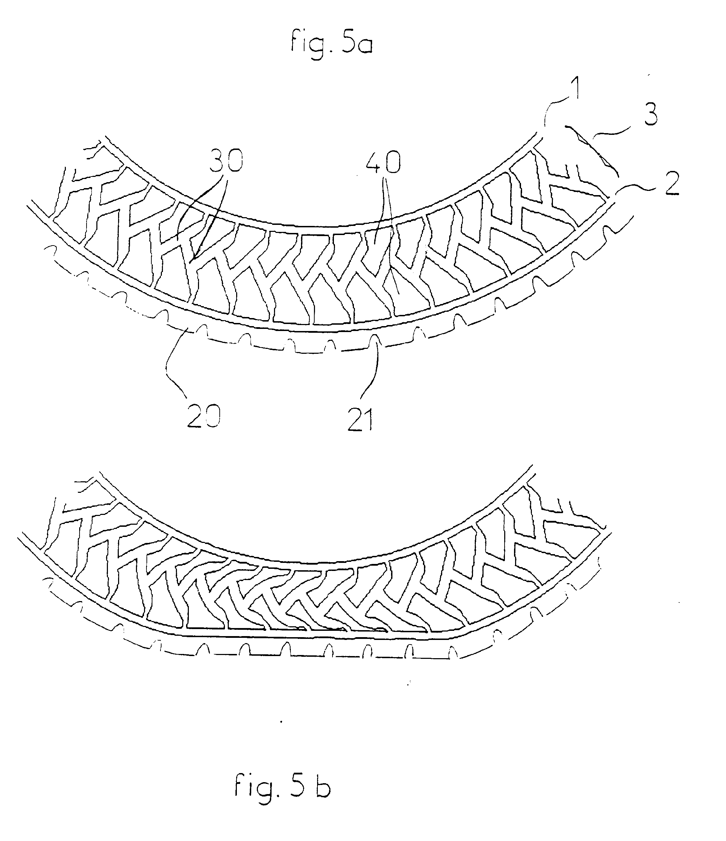

A la figure 5, on aperçoit un bandage dont le motif est constitué par deux éléments 30, le premier étant accroché à l'une de ses extrémités à la base, et à l'autre sensiblement au milieu du second élément, le second élément étant accroché à l'une de ses extrémités sensiblement au milieu du premier élément 30 d'un motif adjacent, et à l'autre au sommet 2. Les éléments 30 présentent un amincissement à celles de leurs extrémités accrochées respectivement a la base et au sommet. Cette variante très simple donne de bons résultats, notamment tout à fait suffisants pour servir de roue à usage temporaire.

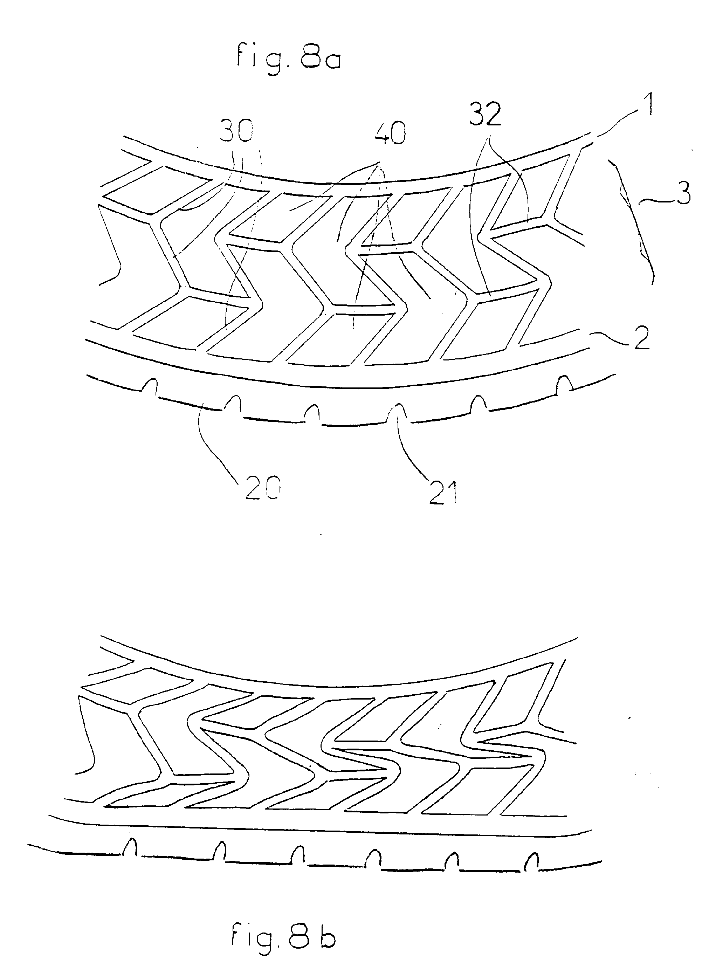

Aux figures 8, 9 et 10, on voit que les éléments 30 d'un motif sont en appui sur les éléments 30 du motif adjacent par des éléments auxiliaires 32 disposés circonférentiellement.

On choisira le nombre total de motifs en fonction du nombre souhaitable d'éléments 30 dans l'aire de contact, compte tenu de l'allure de la répartition de pression souhaitée. Il s'agit là de considérations tout à fait comparables avec ce qui est connu pour les bandes de roulement de pneumatique, le parallèle pouvant être fait entre les éléments 30 et les blocs de caoutchouc dans une sculpture. Toutes les structures selon l'invention ont nécessairement des caractéristiques longitudinales dissymétriques. C'est ce caractère dissymétrique qui permet de réaliser un bandage tel que la pression de contact au sol soit croissante depuis l'entrée vers la sortie de 1'aire de contact, en respectant bien entendu un sens de rotation déterminé. Ce phénomène peut être amplifié, ou au contraire compensé, selon le but recherché pour une application déterminée. La base permet bien entendu de disposer tout type de liaison ou fixation avec une jante rigide. Ou bien même, on peut réaliser une roue d'une seule pièce avec le bandage de l'invention, la base constituant alors en toute généralité la transition entre la structure 3 réellement déformable et la zone rigide.

Les matériaux utilisables sont tous les matériaux coulables, injectables ou moulables. Les polyuréthanes sont tout spécialement appropriés. Ces matériaux doivent bien sûr être aptes à résister aux déformations liées au fonctionnement du bandage qui doit pouvoir se mettre à plat et supporter les passages d'obstacles comme un pneumatique. Un choix assez simple peut être fait sur base du calcul d'une grandeur significative liée à la charge qu'une tranche unitaire du bandage est capable de porter, donc liée à la pression moyenne au sol, elle-même image de la pression de gonflage des pneumatiques que l'invention est susceptible de remplacer.

Cette grandeur, que l'on peut relier au fonctionnement de la matière en flexion lors de l'écrasement du bandage, vaut le produit du module E d'extension/compression du matériau exprimé en Mega Pascal par le cube de son taux de déformation ε admis en service exprimé en %

Cette grandeur Eε³ doit valoir environ 50 000 Mega Pascal pour les voitures particulières et peut monter à plus de 200 000 Mega Pascal pour les véhicules industriels.

Pour les voitures particulières, les polyuréthanes sont tout spécialement appropriés, avec des modules supérieurs à 20 MPa mesurés sur éprouvette à 2 % d'extension et à 20°C. et de préférence supérieurs à 40 MPa, afin de conserver des bandages de masse équivalente à celle des pneus.

Par exemple un Polyesther T.D.I. 4,4'-methylène bis ortho chloranilline avec un module à 50 MPa donne satisfaction pour l'exemple représenté aux figures 1a et 1b.

Dans ce cas la grandeur Eε³ vaut 50 000 en admettant un taux de déformation en service de 10 %, sachant que l'on peut attendre de ce matériau un taux de déformation occasionnel supérieur à cinq fois celui-ci afin de préserver l'intégrité du bandage lors du passage d'obstacles.

Le but de la présente invention est de proposer un bandage utilisable en substitution des pneumatiques. La structure proposée est donc optimisée dans ce but. Cependant, il est envisageable d'incorporer un pareil bandage dans un pneumatique pour constituer un appui interne procurant au pneumatique la capacité de rouler dégonflé.

## Revendications

1. Bandage déformable non pneumatique, comportant une base (1), une structure déformable (3) et un sommet (2), ladite base (1) assurant la transition vers une zone rigide, ledit sommet (2) assurant la liaison avec une bande de roulement (20), la structure déformable (3) comportant des parties massives et des alvéoles (40), lesdites alvéoles (40) s'étendant transversalement sur toute la largeur dudit bandage, les alvéoles (40) de la structure déformable (3), vues en coupe par tout plan perpendiculaire à l'axe de rotation, étant toutes intrinsèquement dissymétriques par rapport à toute direction radiale, les parties massives étant inclinées par rapport à la direction radiale et, lorsque l'on considère ladite structure (3) en section perpendiculaire à l'axe de rotation, les parties massives étant constituées par des éléments élancés (30) constituant un motif répétitif circonférentiellement, ledit bandage étant caractérisé en ce que lesdits éléments élancés (30) sont disposés selon deux angles de signe opposé, de sorte que le déplacement le long des éléments (30) en progressant depuis la base vers le sommet, en cheminant jusqu'au niveau radialement le plus élevé de tout élément emprunté, impose au moins un passage d'une orientation à l'orientation opposée.

2. Bandage selon la revendication 1, caractérisé en ce que les alvéoles (40) constituent un motif disposé entre la base (1) et le sommet (2), le motif étant répétitif circonférentiellement.

3. Bandage selon la revendication 1, caractérisé en ce que la base (1) comporte des alvéoles (41).

4. Bandage selon la revendication 1, caractérisé en ce que le sommet (2) comporte des alvéoles (41).

5. Bandage selon la revendication 2, caractérisé en ce que les alvéoles (40) sont de forme quadrangulaire.

6. Bandage selon la revendication 5, caractérisé en ce que ladite forme quadrangulaire a sensiblement l'allure d'un parallélogramme.

7. Bandage selon la revendication 5, caractérisé en ce que ladite forme quadrangulaire a sensiblement l'allure d'un rectangle.

8. Bandage selon la revendication 2, caractérisé en ce que les alvéoles (40) ont l'allure d'un chevron.

9. Bandage selon l'une des revendications 5 à 8, caractérisé en ce que, dans un motif, deux alvéoles (40) adjacentes dans les sens radial sont orientées circonférentiellement en sens opposés.

10. Bandage selon la revendication 2, caractérisé en ce que ledit motif est constitué par deux éléments (30), le premier étant accroché à l'une de ses extrémités à la base (1), et à l'autre sensiblement au milieu du second élément (30), le second étant accroché à l'une de ses extrémités sensiblement au milieu du premier élément (30) d'un motif adjacent, et à l'autre au sommet (2).

11. Bandage selon la revendication 10, caractérisé en ce que lesdits éléments (30) présentent un amincissement à celles de leurs extrémités accrochées respectivement à la base et au sommet.

12. Bandage selon la revendication 10, caractérisé en ce que lesdits éléments (30) reliés au sommet présentent un renforcement à leur extrémité reliée au sommet.

13. Bandage selon la revendication 2, caractérisé en ce que les éléments (30) d'un motif sont en appui sur les éléments (30) du motif adjacent par des éléments auxiliaires (32) disposés circonférentiellement.

14. Bandage selon l'une des revendications 1 à 13, caractérisé en ce que lesdits angles α, β ont une valeur comprise entre 20° et 70°.

## Patentansprüche

1. Nichtpneumatischer verformbarer Radreifen, mit einer Basis (1) , einer verformbaren Struktur (3) und einer Oberseite (2), wobei die Basis (1) den Übergang zu einem starren Bereich herstellt, die Oberseite (2) die Verbindung mit einer Lauffläche (20) herstellt, die elastische Struktur (3) massive Bereiche und Waben (40) aufweist, wobei sich die Waben (40) quer über die ganze Breite des Reifens erstrecken und die Waben (40) der elastischen Struktur (3) im Schnitt längs einer jeden zur Drehachse senkrechten Ebene intrinsisch asymmetrisch bezüglich jeder radialen Richtung sind, die massiven Bereiche gegen die radiale Richtung geneigt sind, und, wenn man die Struktur (3) im Schnitt senkrecht zur Drehachse betrachtet, die massiven Bereiche aus langgestreckten Elementen (30) gebildet sind, die ein in Umfangsrichtung wiederholtes Muster bilden,
**dadurch gekennzeichnet,**
daß die langgestreckten Elemente (30) entlang zweier Winkel mit entgegengesetzten Vorzeichen orientiert sind, so daß die Bewegung entlang der Elemente (30) von der Basis zur Oberseite, die bis zum radial höchsten Niveau eines jeden beschrittenen Elements verläuft, zu mindestens einem Übergang von einer Orientierung zur entgegengesetzten Orientierung zwingt.

2. Reifen nach Anspruch 1,
dadurch gekennzeichnet,
daß die Waben (40) ein zwischen der Basis (1) und der Oberseite (2) angeordnetes Muster bilden, das sich in Umfangsrichtung wiederholt.

3. Reifen nach Anspruch 1,
dadurch gekennzeichnet,
daß die Basis (1) Waben (41) aufweist.

4. Reifen nach Anspruch 1,
dadurch gekennzeichnet,
daß die Oberseite (2) Waben (41) aufweist.

5. Reifen nach Anspruch 2,
dadurch gekennzeichnet,
daß die Waben (40) viereckige Form haben.

6. Reifen nach Anspruch 5,
dadurch gekennzeichnet,
daß die viereckige Form ungefähr parallelogrammartig ist.

7. Reifen nach Anspruch 5,
dadurch gekennzeichnet,
daß die viereckige Form ungefähr rechteckig ist.

8. Reifen nach Anspruch 2,
dadurch gekennzeichnet,
daß die Waben (40) sparrenförmig sind.

9. Reifen nach einem der Ansprüche 5 bis 8,
dadurch gekennzeichnet,
daß in einem Muster zwei in radialer Richtung benachbarte Waben in Umfangsrichtung in entgegengesetztem Sinn orientiert sind.

10. Reifen nach Anspruch 2,
dadurch gekennzeichnet,
daß das Muster aus zwei Elementen (30) gebildet ist, von denen das erste an einem seiner Enden an der Basis (1) und mit dem anderen ungefähr in der Mitte des zweiten Elements (30) befestigt ist und das zweite mit einem seiner Enden ungefähr in der Mitte des ersten Elements (30) eines benachbarten Musters und mit dem anderen an der Oberseite (2) befestigt ist.

11. Reifen nach Anspruch 10,
dadurch gekennzeichnet,
daß die Elemente (30) an ihren mit der Basis bzw. der Oberseite verbundenen Enden eine Verjüngung aufweisen.

12. Reifen nach Anspruch 10,
dadurch gekennzeichnet,
daß die mit der Oberseite verbundenen Elemente (30) eine Verstärkung an ihrem mit der Oberseite verbundenen Ende aufweisen.

13. Reifen nach Anspruch 2,
dadurch gekennzeichnet,
daß die Elemente (30) eines Musters über in Umfangsrichtung angeordnete Hilfselemente (32) auf den Elementen (30) des benachbarten Musters abgestützt sind.

14. Reifen nach einem der Ansprüche 1 bis 13,
dadurch gekennzeichnet,
daß die Winkelα, β einen Wert zwischen 20 und 70° haben.

## Claims

1. Deformable non pneumatic tire comprising a base (1) , a deformable structure (3) and a cap (2), said base (1) assuring the transition to a rigid zone, said cap (2) assuring the connection with a tire tread (20), said deformable structure (3) comprising solid parts and recesses (40), said recesses (40) extending crosswise over the entire width of said tire, said recesses (40) of deformable structure (3), seen in section through any plane perpendicular to the axis of rotation, being all intrinsically dissymmetrical relative to any radial direction, the solid parts being inclined relative to the radial direction, and said structure (3) being considered in a section perpendicular to the axis of rotation, the solid parts consisting of slender elements (30) constituting said circumferentially repetitive pattern, said non pneumatic tire being characterized by the fact that said slender elements (30) are placed along two angles of opposite sign so that the displacement along elements (30) by progressing from the base to the cap, by advancing to the radially highest level of any element taken calls for at least one passage from one orientation to the opposite orientation.

2. Non pneumatic tire according to claim 1, characterized by the fact that said recesses (40) constitute a pattern placed between base (1) and cap (2), the pattern being circumferentially repetitive.

3. Non pneumatic tire of claim 1 characterized by the fact that said base (1) comprises recesses (41).

4. Non pneumatic tire of claim 1 characterized by the fact that said cap (2) comprises recesses (41).

5. Non pneumatic tire according to claim 2 characterized by the fact that said recesses (40) are of quadrangular shape.

6. Non pneumatic tire according to claim 5, characterized by the fact that said quadrangular shape has approximately the shape of a parallelogram.

7. Non pneumatic tire according to claim 5, characterized by the fact that said quadrangular shape has approximately the shape of a rectangle.

8. Non pneumatic tire according to claim 2, characterized by the fact that said recesses (40) have the shape of a chevron.

9. Non pneumatic tire according to one of claims 5 to 8, characterized by the fact that in a pattern, two radially adjacent recesses (40) are circumferentially oriented in opposite directions.

10. Non pneumatic tire according to claim 2, characterized by the fact that said pattern consists of two elements (30), the first being hooked at one of its ends to base (1) and at the other approximately to the middle of second element (30), the second being hooked at one of its ends approximately to the middle of first element (30) of an adjacent pattern, and at the other to cap (2).

11. Non pneumatic tire according to claim 10, characterized by the fact that said elements (30) exhibit a thinning at those of their ends respectively hooked to the base and to the cap.

12. Non pneumatic tire according to claim 10, characterized by the fact that said elements (30) connected to the cap exhibit a reinforcing at their end connected to the cap.

13. Non pneumatic tire according to claim 2, characterized by the fact that in elements (30) of a pattern rest on elements (30) of the adjacent pattern by auxiliary elements (32) placed circumferentially.

14. Non pneumatic tire according to one of claims 1 to 13, characterized by the fact that said angles α, β have a value comprised between 20° and 70°.
